Europäisches Patentamt

European Patent Office

Office européen des brevets

(11) Publication number: **0 421 324 A2**

## EUROPEAN PATENT APPLICATION

(21) Application number: 90118811.0

(22) Date of filing: 01.10.90

(51) Int. Cl.5: **B60Q 1/30, F21Q 1/00**

(30) Priority: 05.10.89 IT 2192789

(43) Date of publication of application:
**10.04.91 Bulletin 91/15**

(84) Designated Contracting States:
**AT BE CH DE DK ES FR GB GR IT LI LU NL SE**

(71) Applicant: SACEX S.p.A.
**Corso Europa 12
I-20122 Milano(IT)**

(72) Inventor: **Bellu, Mario
Via Parini 23
I-20038 Seregno (Milano)(IT)**

(74) Representative: **Modiano, Guido et al
MODIANO, JOSIF, PISANTY & STAUB
Modiano & Associati Via Meravigli, 16
I-20123 Milano(IT)**

(54) Indicator panel structure, particularly for heavy motor vehicles.

(57) The present invention relates to an indicator panel structure, particularly for heavy motor vehicles, which comprises a supporting element (1) which can be applied to the heavy motor vehicle and has, on its front side, at least one recess (2) in which a catadioptric refracting plate (4) can be accommodated and, proximate to the recess (2), at least one raised portion (3) for the application of a fluorescent element (5).

Fig.1

# INDICATOR PANEL STRUCTURE, PARTICULARLY FOR HEAVY MOTOR VEHICLES

The present invention relates to an indicator panel structure particularly for heavy motor vehicles.

As is known, currently applicable laws in some countries require, for heavy motor vehicles, the adoption of refracting-reflecting indicator panels which have preset dimensions and configurations and must be applied on the outer surface of the motor vehicle.

Said panels are commonly constituted by a supporting element to which a plate-like element is applied; the catadioptric elements and the fluorescent elements are accomodated on said plate like element and are arranged inclined, alternating a catadioptric portion to a fluorescent one.

The catadioptric portions and the fluorescent portions are currently applied on a planar support which is in turn inserted or in any case connected to the supporting element which is then applied directly to the motor vehicle.

This solution is not free from disadvantages which derive mainly from the lack of precision in the adjacent arrangement of the refracting inclined portions and the fluorescent portions, and can furthermore suffer potential separations, due to the infiltration of water or the like, which can alter the coupling performed or make it ineffective.

The aim of the present invention is to eliminate the above described disadvantages by providing an indicator panel structure, particularly for heavy motor vehicles, which allows to obtain a rapid and precise assembly of the catadioptric and fluorescent elements.

Within the scope of the above described aim, a particular object of the invention is to provide an indicator panel structure which can adequately withstand weathering.

Another object of the present invention is to provide an indicator panel structure which facilitates the combination of alternated inclined elements with the precision required by currently applicable laws.

Not least object of the present invention is to provide an indicator panel structure particularly for heavy motor vehicles which is relatively easy to manufacture while having modest production costs.

This aim, these objects and others which will become apparent hereinafter are achieved by an indicator panel structure, in particular for heavy motor vehicles, which comprises a supporting element which can be applied to said heavy motor vehicle, characterized in that said supporting element has, on its front side, at least one recess for the accommodation of at least one catadioptric plate-like element and, proximate to said at least one recess, at least one raised portion for the application of a fluorescent element.

Further characteristics and advantages will become apparent from the description of a preferred but not exclusive embodiment of an indicator panel structure, according to the invention, illustrated only by way of non limitative example in the accompanying drawings, wherein:

figure 1 is a plan view of an indicator panel structure according to the invention and an exploded view of polygonal catadioptric plates and of a polygonal fluorescent element;

figure 2 is a sectional view taken along the line II-II of figure 1;

figure 3 is an enlarged-scale sectional view taken along the line III-III of figure 1;

figure 4 is an enlarged-scale sectional view taken along the line IV-IV of figure 1;

figure 5 is a plan view of a further embodiment of an indicator panel structure according to the invention;

figure 6 is an enlarged-scale sectional view taken along the line VI-VI of figure 5;

figure 7 is a view of a triangular reflector with a high degree of reflection;

figure 8 is a view of the reflector with a different arrangement of the refracting areas, which in practice are rotated by 90° with respect to the solution of figure 7;

figures 9 and 10 are views of a possible arrangement of the reflector according to figures 7 and 8.

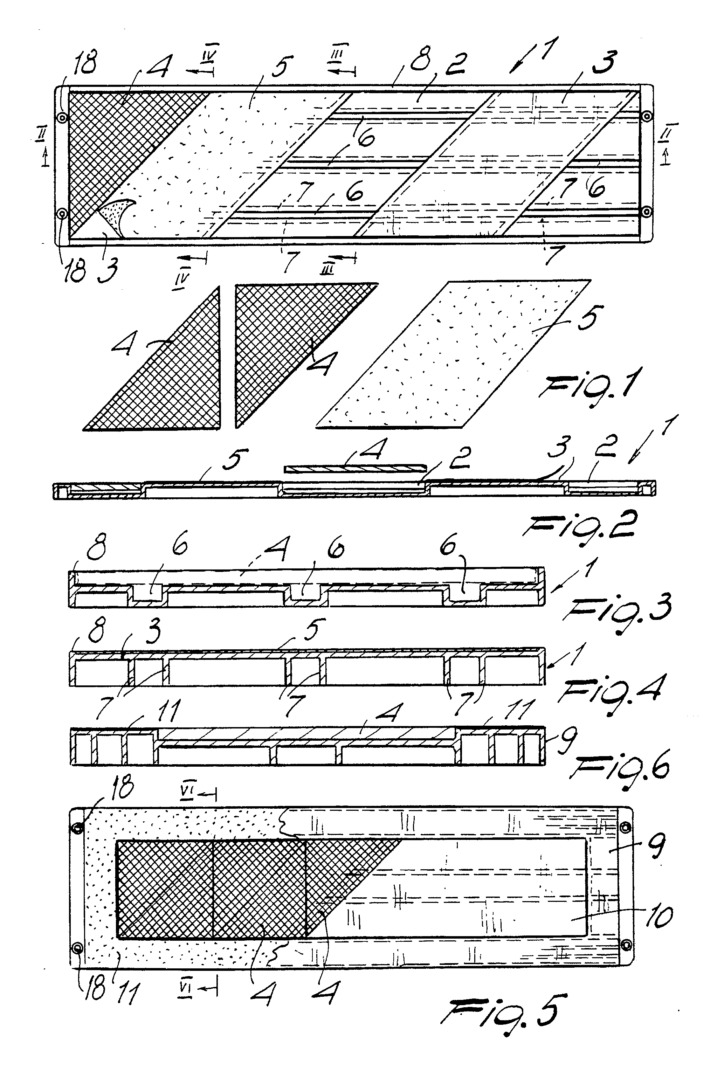

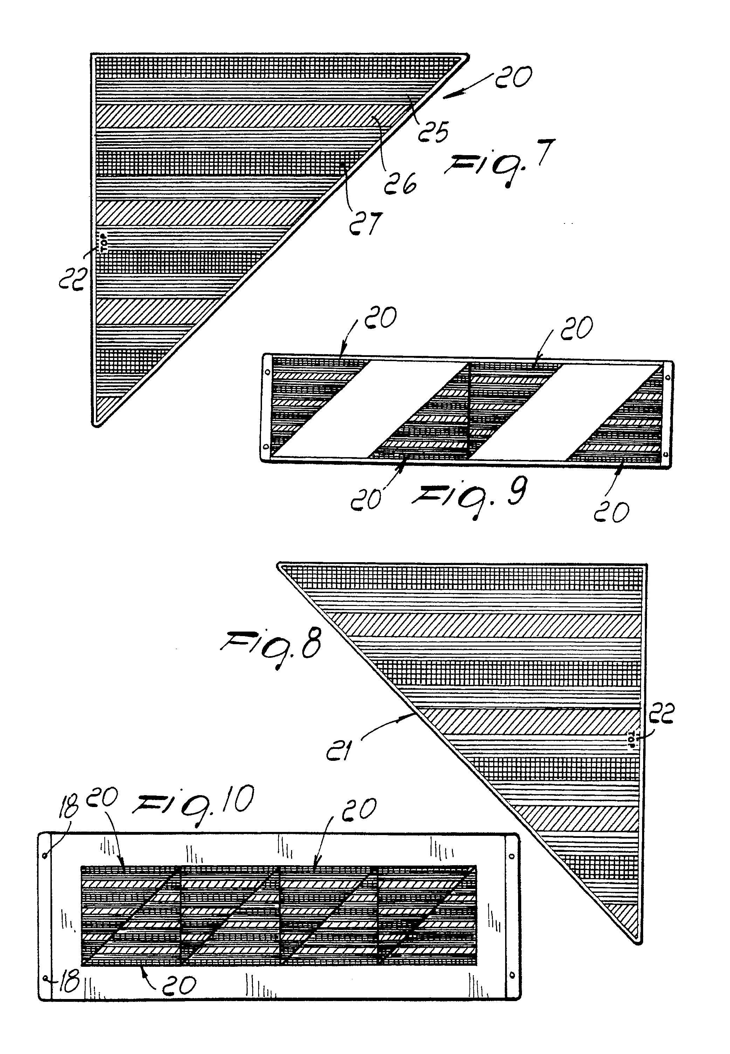

With reference to the above figures and in particular to figures 1 to 6, the indicator panel structure, according to the invention, substantially comprises a supporting element 1 which has, on its front side, recesses 2 alternated with raised portions 3.

The recesses 2 are intended to accommodate catadioptric polygonal plate-like elements 4. These plate-like elements 4 are advantageously in the shape of a right-angled isosceles triangle so as to be able to adapt to the different shapes of the refracting bands required by the laws. The plate-like elements 4 are associated within the recesses 2 by means of adhesives, of a snap-together coupling, of welding or of other known coupling means.

The raised portions 3 are instead intended to receive the fluorescent elements, which can be constituted by panels made of self-adhesive fluorescent material, or can possibly be covered by means of the application of a coat of fluorescent paint, obtaining thereby the same function.

The depth of the recesses 2 and the height of the plate-like elements 4 is such as to obtain a substantially planar front surface once the plates 4 have been inserted and the fluorescent panels 5, or possibly the coat of fluorescent paint, have been applied.

As illustrated in figures 3 and 4, the supporting element 1, which can be made of molded synthetic material, has, on its rear side, stiffening ridges defined at the recesses 2 by means of channels 6 and at the raised portions 3 by ribs indicated by 7.

A raised edge 8 is defined along the outer perimeter of the supporting element 1 and delimits and defines the surfaces useful for gluing or in any case for the application of the panels 5 and for the insertion of the plate-like elements 4.

The right-angled isosceles triangle shape of the plate-like elements 4 allows to provide bands with different inclinations and also other geometric shapes depending of the type of panel to be provided and according to the applicable laws. In particular, figure 1 illustrates bands which are inclined by 45° with respect to the longitudinal extension of the supporting element 1, by using two plates 4 in the shape of a right-angled isosceles triangle coupled at one of their catheti.

Holes 18 are furthermore defined on the shorter sides of the supporting element 1 for fixing the latter to the heavy motor vehicle by means of known coupling means such as screws, rivets and the like not illustrated in the drawing.

In order to increase the characteristics of reflection and refractivity of the catadioptric plate-like elements it is also possible to use catadioptric plate-like elements with a particular configuration which are illustrated in figures 7 to 10.

These plate-like elements, generally indicated by reference numerals 20 and 21, have a triangular configuration and are characterized by an arrangement of various prism-like elements at predetermined regions.

The presence of two different plate-like elements, in which the elements or areas are in practice rotated by 90° with respect to one another, is determined by the fact of allowing to provide the various applications for the various required positions.

Each of the plate-like elements 20 and 21 furthermore has at one cathetus, a reference element 22 which is constituted for example by the inscription TOP, which has the function of identifying the direction of application of the plate-like element so as to make the plate-like elements uniform according to the particular use.

The peculiarity of the plate-like elements 20 and 21 is determined by a particular arrangement of regions which allow to obtain truly high refractivity values.

In particular, a first region indicated by the reference numeral 25 is provided and has, in the specific example, a band-like extension; this first region 25 is constituted by prisms which create a reflection of light along a direction which is substantially perpendicular to the plane of arrangement of the plate-like element.

This first region 25 has a preferable but non-limiting width of 9.6 mm.

The plate-like element 20 furthermore has a second region 26 which is defined by means of prisms having a rectangular base which create a reflection of light with an inclination in one direction comprised between 20° and 30°, preferably 22° and have a preferable width of 8.5 mm.

At least one third region, indicated by 27, is furthermore provided and is obtained by means of prisms having a rectangular base which create a reflection of light with an angle comprised between 20° and 30°, preferably 22° in a direction which is opposite to the angle of reflection of the second region 26.

The above mentioned regions preferably have a band-like extension which is parallel to one of the catheti and are arranged so that each first region 25 is flanked by a second region 26 and by a third region 27; each second region 26 and each third region 27 is interposed between two first regions 25.

Considerably high reflected-light values are obtained with this particular arrangement of the prisms on the reflecting elements, and experimental tests have shown that 60% of the total light is reflected at ±5° with respect to the normal to the plane of the surface of the plate-like element, whereas 20% is reflected according to an angle of 30° and the remaining 20% is reflected according to an angle of 40°.

From what has been described it is apparent that the indicator panel structure, according to the invention, fully achieves the intended aim, since the particular execution of the supporting element with recesses alternated to raised portions allows the rapid placement and assembly of the catadioptric plate-like elements and of the fluorescent elements.

The invention thus conceived is susceptible to numerous modifications and variations, all of which are within the scope of the inventive concept.

In particular, as shown in figures 5 and 6 and in figure 10, the supporting element 1 is configured with a perimetric raised portion 9 which has a width specified by the currently applicable laws and delimits a central recess 10 in which a plurality of plate-like elements 4 can be accomodated.

A portion of fluorescent material 11 is applied on the perimetric raised portion 9 for example by gluing.

As mentioned, the particular right angled isosceles triangle shape of the plate-like elements 4 allows, in this case, to obtain a rectangular horizontal band by arranging hypotenuses adjacent to hypotenuses and catheti adjacent to catheti.

All the details may furthermore be replaced with technically equivalent elements.

In practice, the materials employed, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Indicator panel structure, in particular for heavy motor vehicles, comprising a supporting element (1) which can be applied to said heavy motor vehicle, characterized in that said supporting element (1) has, on its front side, at least one recess (2, 10) for the accommodation of at least one catadioptric plate-like element (4,20,21) and, proximate to said at least one recess (2,10), at least one raised portion (3,9) for the application of a fluorescent element (5,11).

2. Indicator panel structure, according to claim 1, characterized in that said supporting element (1) has, on its front side, a plurality of recesses (2) for the accommodation of catadioptric plate-like elements (4,20,21) alternated with raised portions (3) for the application of fluorescent elements (5).

3. Indicator panel structure, according to anyone of the preceding claims, characterized in that each catadioptric plate-like element (4) is composed of polygonal elements which are arranged mutually adjacent in said recesses (2).

4. Indciator panel structure, according to claim 3, characterized in that said polygonal elements are substantially shaped like a right-angled isosceles triangle.

5. Indicator panel structure, according to one or more of the preceding claims, characterized in that said fluorescent elements (5,11) are panels of the self-adhesive type.

6. Indicator panel structure, according to one or more of the preceding claims, characterized in that said fluorescent elements (5,11) are constituted by a paint applied on said raised portions (3).

7. Indicator panel structure, according to one or more of the preceding claims, characterized in that said supporting element (1) is perimetrically provided with an edge (9) for the accomodation of said fluorescent elements (5,11) and of said catadioptric plate-like elements (4,20,21).

8. Indicator panel strucutre, according to claim 7, characterized in that a central recess (10) is defined in a central region of said supporting element (1), said raised portion (9) extending around said recess (10).

9. Reflector for motor vehicles, characterized in that it comprises a plate-like body (20,21) which defines at least one first region (25) with prisms which are adapted for creating a reflection of light along a direction which is substantially perpendicular to the plane of arrangement of said plate-like element (20,21), at least one second region (26) with prisms which are adapted for creating a reflection of light along a directi on which is inclined between 20° and 30° in one direction with respect to said perpendicular direction, and at least one third region (27) with prisms which are adapted for creating a reflection of light along a direction which is inclined between 20° and 30° in the opposite direction with respect to the prisms of said second region (26).

10. Reflector according to claim 9, characterized in that said prisms of said at least second region (26) and of said at least third region (27) preferably define an angle of reflection of 22°.

11. Reflector according to claims 9 and 10, characterized in that said regions (25,26,27) are arranged in mutually flanking bands.

12. Reflector according to claim 11, characterized in that said first region (25) is located between one of said second regions (26) and one of said third regions (27).

13. Reflector according to claim 11, characterized in that erach of said second regions (26) is flanked on both sides by said first regions (25).

14. Reflector according to claim 11, characterized in that each of said third regions (27) is flanked by said first regions (25).

15. Reflector according to one or more of claims 9-14, characterized in that said plate-like element (20,21) has a triangular configuration, said bands (25,26,27) being parallel to a cathetus on said triangular plate-like element (20,21).

16. Reflector according to claim 15, characterized in that it comprises a plate-like element (20) with said regions (25,26,27) orientated in a first direction and a plate-like element (21) with regions orientated according to a direction which is perpendicular to the regions (25,26,27) of the other plate-like element (20).

17. Reflector according to claim 9, characterized in that it has, on said plate-like element (20,21), a reference notch (22) for the correct orientation of said plate-like elements (20,21) and consequently of said regions (25,26,27).

Fig.1

Fig.2

Fig.3

Fig.4

Fig.6

Fig.5

Fig.7

Fig.9

Fig.8

Fig.10